# EUROPEAN PATENT SPECIFICATION

(11) **EP 3 458 321 B1**
(45) Date of publication and mention of the grant of the patent: **25.03.2020**
(21) Application number: 17723721.1
(22) Date of filing: 19.05.2017
(51) Int. Cl.: B60T 13/74, F16D 65/14

(54) **BRAKE SUB-ASSEMBLY AND GROUP OF BRAKE ASSEMBLIES**
BREMSENUNTERBAUGRUPPE UND GRUPPE VON BREMSBAUGRUPPEN
SOUS-ENSEMBLE DE FREIN ET GROUPE D'ENSEMBLES DE FREIN

(30) Priority: 19.05.2016 EP 16170447
(43) Date of publication of application: 27.03.2019
(73) Proprietor: Haldex Brake Products Aktiebolag, 261 24 Landskrona (SE)
(72) Inventor: SEVERINSSON, Lars Mattis, 31253 Hishult (SE); TIAINEN, Mikael Kristian, 43793 Lindome (SE)
(74) Representative: REHBERG HÜPPE + PARTNER
(86) International application number: PCT/EP2017/062126
(87) International publication number: WO 2017/198828

(56) References cited:
- EP-A1- 2 345 830
- EP-A2- 1 475 552
- WO-A1-2007/082658
- WO-A1-2011/076366
- DE-A1-102008 064 404
- US-A1- 2008 217 117

## Description

### TECHNICAL FIELD OF THE INVENTION

The present invention relates to
a) a group of brake assemblies or
b) a brake sub-assembly
   comprising brake force transmission unit which is used for a vehicle, in particular
   - a commercial vehicle,
   - a vehicle driven solely by electrical energy and/or
   - a hybrid vehicle driven both by electrical energy as well as by a combustion engine, to mention only some examples. The brake force transmission unit is interposed between
   - a brake actuator which (in particular upon actuation by a driver and/or by an automatic actuation by a control unit) produces an input torque and
   - a brake device as e.g. a disc brake device.

The brake force transmission unit receives an input torque from the brake actuator and produces an output force which is transferred (in some cases also under interposition of further transmitting units) to the brake device for producing the brake force at brake pads of the brake device.

The brake force transmission unit serves for
- (directly or indirectly) mechanically connecting the brake actuator to the brake device, wherein it is also possible that the brake actuator is held by the brake force transmission unit at the brake device,
- changing the line of action of the input force to the line of action of the output force,
- achieving a desired characteristic of the dependence of the output force from the input torque over the stroke of the brake actuator,
- changing a rotational movement to a translational movement and/or
- increasing the input force to an output force by a suitable transmission ratio.

The inventive brake sub-assembly comprises an electrical drive for producing the actuating or input force upon electrical energization and a brake force transmission unit of the above specified type. The inventive group of brake assemblies might e.g. be manufactured and sold by a company, be held on store or be used in different vehicles of a vehicle fleet.

### PRIOR ART

EP 1 977 134 B1 discloses an electro-mechanical brake assembly. In the brake assembly an electrical drive biases a rotor with an input torque which depends on the electrical energisation of the electrical drive. By a brake force transmission unit (here a recirculating ball bearing transmission) the rotation of the rotor is transformed into a translational movement of a pushrod. The pushrod is linked to an end region of a brake lever. The brake lever is eccentrically linked to a calliper of the brake device for being pivoted. The other end region of the brake lever is linked to an actuating piston. A pivoting of the brake lever caused by the movement of the first pushrod leads to an actuation of the actuating piston. The front face of the actuating piston presses a roller against the brake pad for producing a brake force at a brake disc. Further actuating pistons arranged parallel to the actuating piston which is actuated by the lever are directly supported at the calliper by bearings. The further actuating pistons have front faces that form inclined ramps. Rollers are interposed between these ramps and the brake pad such that with a movement of the rollers along the ramp in circumferential direction of the rotational axis of the brake disc a self-enforcing mechanism is provided for producing the brake force. The actuating pistons comprise a wear adjusting mechanism changing the length of the actuating piston by a kind of spindle drive. The spindle drive is here formed by a piston spindle linked to the brake lever or the calliper and a spindle element forming the front face with the contact surface or ramp for the rollers. During the brake actuation the brake pads are moved in a direction parallel to the rotational axis of the brake disc. This movement is caused by the actuation of the electrical drive. Furthermore, the brake pads are moved in circumferential direction of the rotational axis of the brake disc leading to the desired self-enforcing effect.

WO 2011/076366 A1 relates to an electromechanical brake actuator used for actuating the parking brake or service brake of a vehicle. In the brake actuator the driving moment of a driving shaft of an electric drive is transferred via a series of meshing gears to a sun gear of a planetary gearset comprising two sub-gearsets arranged coaxially to each other. An output shaft of the planetary gearset is coupled to a spindle drive for actuating a brake piston. WO 2011/076366 A1 suggests a design with a sub-assembly comprising a supporting element. In the sub-assembly the electric drive, the meshing gears and the planetary gearset are mounted to the supporting element. For reducing vibrations of the brake actuator the supporting element (and so the electric drive, the meshing gears and the planetary gearset) is supported via two damping elements at the housing of the brake actuator.

Also EP 2 345 830 A1 discloses a brake actuator wherein an electric drive is coupled by a series of gears to a planetary gearset. A lid is mounted to the electric drive and the housing of the planetary gearset. The lid covers and encloses the set of gears. Furthermore, the lid serves for supporting the bearings for the gears driven in series by the electric drive. In the series of gears the last gear is drivingly coupled to a rotary shaft. The outer surface of the rotary shaft builds a cylindrical sun gear being in frictional contact to planetary rollers. The rollers are supported for being rotated by support pins. These pins are housed in elongated holes of a planet carrier having an orientation in radial direction. By a spring the support pins are pressed in radial inner direction under guidances by the elongated holes towards the outer surface of the rotary shaft for establishing the frictional contact for transferring the required torque from the rotary shaft to the planetary rollers. The radial outer circumferences of the planetary rollers mesh with an outer race member which is fixed against rotation but axially slidably fitted into the housing. The outer race member comprises helical grooves wherein helical ribs are fixedly fitted. These ribs mesh with a corresponding helical groove of the planetary rollers such that a rotary movement of the planetary rollers causes an axial movement of the outer race member. Due to the fact that the planetary rollers on the one hand form a frictional contact with the rotary shaft and on the other hand mesh with the helical ribs the outer circumference of the planetary rollers has to be optimized both for a frictional contact with a large coefficient of friction and for the form locking engagement of the helical ribs. The housing is mounted to a calliper body of a brake. The outer race member is used as the output member and rotationally fixed to one of the brake pads.

US 2008/0217117 A1 discloses a brake system for a service brake wherein a brake lever coupled to a brake pad is actuated via a pushrod coupled to a pneumatic service brake actuator. Parallel to the force flow from the pneumatic service brake actuator to the brake lever it is possible to bias the pushrod with an actuating force via an electric drive. The electric drive is coupled to the pushrod by a transmission. In the transmission a driving gear of the electric drive meshes with an outer toothing of a ring gear. An inner thread of the ring gear engages with rollers having external grooves with a geometry corresponding to that of the inner thread of the ring gear. The engagement between the inner thread of the ring gear and the grooves of the rollers is self-blocking. On the radial inner side the grooves of the rollers engage with a drive socket transferring a brake force to the pushrod or engage with the pushrod itself.

WO 2014/170259 A2 discloses a brake assembly wherein a rotation of the output shaft of an electric drive is transmitted in a non-linear fashion by a coupled gear having three linking levers pivotably linked to each other to the rotation of a disc. The disc carries an eccentric bolt biasing a brake pad. Accordingly, a rotation of the output shaft of the electric drive leads to a movement of the eccentric bolt with a corresponding movement of the brake pad towards or away from the brake disc.

DE 10 2008 064 404 A1 discloses a disc brake assembly wherein the brake device comprising the brake pads is actuated by a pneumatic brake cylinder via a force transmission unit. Here, the force transmission unit comprises a pushrod. One end region of the pushrod is coupled for being pivoted to an actuation element of the brake device connected to the brake pad. For providing that the pneumatic brake cylinder can be assembled to the brake assembly having a longitudinal axis or axis of actuation being approximately perpendicular to the direction of actuation of the brake pads, so perpendicular to the rotational axis of the brake disc, the other end region of the pushrod is coupled to the pneumatic brake cylinder via a double-armed lever. The double-armed brake lever is supported for being rotated at a housing of the brake assembly in the connecting region of the two arms of the double-armed brake lever. One end region of the pushrod is coupled for being pivoted to the free end of the first arm of the double-armed brake lever whereas the pneumatic brake cylinder is coupled to the free end region of the second arm of the double-armed brake lever.

According to EP 1 475 552 A2 a brake device of a disc brake assembly is actuated by a pneumatic brake cylinder via a force transmission unit. Here, the force transmission unit comprises an eccentrically pivoted brake lever. A free end region of the eccentrically pivoted brake lever is directly coupled to a pushrod of the pneumatic brake cylinder.

Further prior art is known from EP 0 847 132 A2 and JP 2016-032997 A**.**

### OBJECT OF THE INVENTION

It is the object of the present invention to provide a brake sub-assembly and a group of brake assemblies in particular with
- an alternative design,
- an improved force transfer,
- improved kinematics,
- improved performance and/or
- the option to provide different brake assemblies with reduced effort for manufacturing, storage and/or assembly.

### SOLUTION

According to the present invention, the object of the invention is solved by the features of the independent claim 1. Additional preferred embodiments according to the invention are to be seen in the dependent claims.

### DESCRIPTION OF THE INVENTION

The present invention suggests a brake sub-assembly designated for a brake system of a vehicle. In the following reference is made to this brake sub-assembly also as "first brake sub-assembly". The inventive first brake sub-assembly comprises an electrical drive and a brake force transmission unit. Upon energization of the electrical drive by an electrical power system of the vehicle and an associated electronic control system, the electrical drive produces an actuating force which is transmitted and transformed by the brake force transmission unit.

According to the invention, the brake sub-assembly forms a mounting unit. This mounting unit is in particular a stand-alone unit or has a one-part or multi-part housing. The mounting unit might also have a modular design.

According to the invention, the brake sub-assembly comprises an assembly interface as well as a force transfer interface which might be formed separately from each other or as an integral interface. The assembly interface is designed and configured for mounting the brake sub-assembly to another brake sub-assembly. The other brake sub-assembly (in the following also named "second brake sub-assembly") comprises a brake device which in particular includes the brake pads and the brake calliper. Furthermore, the second brake sub-assembly comprises a further force transmitting unit. The assembly interface provided at the first brake sub-assembly serves for connecting the two brake sub-assemblies for building the brake assembly which can then be operated by an electronic control. The assembly interface is e.g. a flange, bracket or support used for connecting the two brake sub-assemblies.

Furthermore, according to the invention the brake sub-assembly also comprises a force transfer interface. The force transfer interface is used for transferring an output force from the first brake sub-assembly to the second brake sub-assembly.

To mention only one non-limiting example, the further force transmitting unit might be a brake lever pivoted in an eccentric support wherein the eccentric movement of the lever in the support is transferred to the brake pads. One example for a second brake sub-assembly with a further force transmitting unit of this type is described in the patent application US 2013/0008749 A1. Other examples for a second brake sub-assembly with a brake device and a further force transmitting unit are the Haldex Air Disc Brake Module T of the applicant (cp. www.haldex.com/en/Europe/products/air-disc-brakes/modul-t) or similar brake sub-assemblies with a brake device and a further force transmitting unit as described in the publications DE 20 2010 003 738 U, DE 20 2010 003 732 U, DE 20 2010 003 739 U or similar brake sub-assemblies of the competitors of the applicant.

The invention proposes to use a toggle lever drive in the brake force transmission unit. The toggle lever drive comprises a first toggle lever. The first toggle lever has a fixed first rotational axis. The first toggle lever is (directly or indirectly) driven by the electrical drive. Furthermore, the toggle lever drive comprises a second toggle lever. In one end the second toggle lever is pivotally linked to one end of the first toggle lever by a toggle joint. Here, the second toggle lever might itself form the pushrod. The pushrod might not only be moved along its longitudinal axis but also be pivoted in the movement plane of the toggle lever drive. The toggle lever drive of this type also provides an alternative design for a technical solution for changing a rotational movement (here of the first toggle lever) into a movement having at least a translational component (here of the second toggle lever / the pushrod).

Dependent on the dimensions of the two toggle levers and the region of toggle angles passed during the brake actuation, it is possible to vary the transmission ratio of the brake force transmission unit in a wide range by constructive measures. Furthermore, it is possible to use a nonlinear transfer characteristic of the toggle lever drive from the rotational movement of the first toggle lever to the translational component of the movement of the pushrod, wherein the nonlinearity depends on the toggle angle at the toggle joint. For an adaptation of the use of the toggle lever drive to different types of brake assemblies it is possible to use different toggle levers and/or to mount the first toggle lever in different angular positions to the driving component so that the toggle lever drive will be used in different regions of the toggle angle or to use different reference positions of the electrical drive.

For a first solution of the object of the invention claimed by claim 2, a group of brake assemblies is proposed. The brake assemblies of this group comprise the same second brake sub-assemblies. Here, the force transmitting unit comprises a brake lever as the brake lever eccentrically supported as specified above (cp. also the above cited publications, in particular US 2013/0008749 A1). The brake lever forms an interface for an actuating pushrod.

The invention proposes that brake assemblies of a first subgroup of the group of brake assemblies each comprise a conventional pneumatic brake actuator for (directly or indirectly) actuating the pushrod.

Instead, brake assemblies of a second subgroup of the group of brake assemblies comprise an electrical drive for actuating the pushrod. The brake assemblies of the second subgroup comprise a brake sub-assembly of the above specified type.

For this proposal of the invention in the group of brake assemblies one and the same type of second brake sub-assemblies with the same brake devices and the same force transmitting units can be used which in particular leads to reduced costs for manufacturing and storage. Nevertheless, it is possible to use this second brake sub-assembly in a brake assembly of a "conventional type" with a conventional pneumatic brake actuator (first subgroup). For the second subgroup the same brake sub-assembly with brake device and force transmitting unit can be used together with an electrical drive. Accordingly, the brake assemblies of the first subgroup are operated by energy from a pressurised air system, whereas the brake assemblies of the second subgroup receive their energy from an electrical power system. In summary, this inventive solution proposes to use the same type of second brake sub-assembly alternatively together with a pneumatic brake actuator and an electrical drive.

In both cases the brake sub-assembly with the brake device and the force transmitting device might be actuated by a pushrod, wherein these pushrods might for the two cases have the same designs, lengths and degrees of freedom or might also have different designs, lengths and/or degrees of freedom.

The brake assemblies of the different subgroups might be used for different types of vehicles. It is also possible that a given brake assembly of one subgroup installed in a vehicle is retrofitted or changed to a brake assembly of the other subgroup by replacing the pneumatic actuator by the electrical drive (or vice versa).

For a second solution of the object of the invention claimed by claim 1, in an inventive brake sub-assembly the second toggle lever (which forms the pushrod forming the force transfer interface) is coupled to the force transfer interface of an (preferably eccentrically) pivoted brake lever of the brake sub-assembly. Furthermore, a driving shaft is coupled under fixation against rotation to the first toggle lever. For one variant of this solution the driving shaft is directly driven by the electrical drive. However, for other variants of this solution a planetary gearset or any other additional transmission system is located in the force flow between the electrical drive and the driving shaft.

The following relates to
- a brake sub-assembly or
- a group of brake assemblies with a brake force transmission unit arranged in the force flow from the electrical drive to the pushrod
as specified above:
For one embodiment of the invention in the brake force transmission unit a screw roller and a screw spindle which meshes with the screw roller is interposed into the force flow at any position between the input torque and the output force. Said in different words, for this solution the invention is directed to a use of the meshing contact between a screw roller and a screw spindle for a force transmission in the force flow of a brake force transmission unit.

A force transfer by a screw roller meshing with a screw spindle is normally used for other technical field as presses for plastic injection moulding and blow moulding, electro-mechanical presses, broaching machines, large machine tools, car assembly lines (for spot welding, gluing, riveting and the like), factory automation and the like. A screw spindle meshing with a screw roller is used for converting a rotational movement to a linear movement. The screw roller (and/or the screw spindle) is/are typically threaded but may also be grooved dependent on the screw roller and screw spindle type. It is possible that the screw spindle provides a helical railway for one screw roller or multiple screw rollers radially arrayed around the screw spindle. Here, the cross sectional shape of the thread of the screw roller is typically identical to that of the thread of the screw spindle.

The invention bases on the finding that the first use of a screw roller with a screw spindle in a brake force transmission unit for a vehicle might lead to the following effects and improved functionalities (which are only given here as non-limiting examples):
- The contact surface area of the screw roller and the screw spindle might be larger than those of transmitting components basing upon a recirculating ball bearing transmission which leads to an increased stiffness of the load support and load transfer and to an increased service life.
- Constructive measures for guiding the recirculating balls can be avoided which leads to a reduced design space.
- A transmission of forces by a meshing contact of screw rollers and a screw spindle leads to a stable friction force which also applies for changing actuating directions.
- The force transmission by screw rollers and screw spindles leads to a low noise involved by the relative movements (which is independent on the applied load).
- It is possible that by use of a transfer by the meshing contact of a screw roller and a screw spindle a self-locking effect is provided which might (to some extent) hold an actuated position of the brake pad for reduced actuation by the brake actuator or even in the case of a power failure or at least reduces holding forces required for holding a controlled position and a bias of the brake pad.
- By the choice of the number of screw rollers meshing with the screw spindle, it is possible to divide the force transfer to a plurality of parallel force transfer paths which might be advantageous for reducing the bias of single force transfer elements as the screw rollers and related components and/or for balancing the points of transfer force application e.g. in circumferential direction around the longitudinal axis of the screw spindle.

One embodiment of the invention proposes that the screw roller is supported by a shaft for being rotated about an axis of the shaft. Furthermore, the shaft is supported for being rotated about a rotational axis, wherein the rotational axis is located distant from the axis of the shaft supporting the screw rollers but parallel thereto. The shaft is driven by a drive and biased by the input torque of the brake force transmission unit. The driven rotation of the shaft about the rotational axis with a simultaneous rotation of the screw roller about the axis of the other shaft is transformed by the meshing interaction between the screw roller and the screw spindle into a translational movement of the screw spindle. The translational movement can (directly or indirectly) be used for providing the desired translational movement of the brake pad towards and away from the brake disc associated with the vehicle wheel.

Preferably, the shaft for this embodiment forms a planet carrier of a planetary gear, whereas the screw roller forms the planet of the planetary gear. The screw spindle meshing with the screw roller forms the sun of the planetary gear. However, the planetary gear is no usual planetary gear because the sun is not rotated but moved by a translational movement which is due to the meshing of the threads of the screw spindle and the screw roller.

It is possible that only one single screw roller is used. For another embodiment of the invention, the force flow is divided to at least two, preferably three screw rollers. For this embodiment, a planet carrier is supported for being rotated about the afore-mentioned rotational axis. The planet carrier carries at least two shafts. The shafts each support one screw roller for being rotated relative to the shaft. The screw rollers each mesh with the screw spindle, wherein the screw rollers (and the associated shafts) are evenly distributed in circumferential direction around the screw spindle.

There are a lot of options for causing the rotational movement of the planet carrier or the shafts supporting the screw roller. For one embodiment of the invention, the shaft of planet carrier is (directly or indirectly) connected by a torque transferring connection (so a driving connection) to a rotor of an electrical drive. Here, the torque transferring connection in the simplest case means a rigid connection of the shaft or the planet carrier to the rotor. However, it is also possible that other transmitting and force and movement changing units are integrated in the torque transferring connection between the planet carrier or shaft and the rotor.

Any kind of technique might be used for supporting the screw spindle relative to the housing of the brake force transmission unit with a translational axial degree of freedom but a blocked rotational degree of freedom. For one embodiment of the invention, a spline fitting is used between the screw spindle and the housing for blocking a rotational movement of the screw spindle relative to the housing and for permitting a translational movement of the screw spindle relative to the housing. Here, any type of known spline fitting can be used including a spline fitting with straight sided splines, involute splines, straight sided spline shafts or a parallel key spline shaft. The use of a spline fitting has shown to be very robust and provides a precise guidance of the screw spindle with increased lifetime.

Whereas it is generally possible that the electrical drive drives the screw roller, the shaft or the rotor or the planet carrier of the brake force transmission unit via another transmission device, for one embodiment of the invention the electrical drive directly drives the screw roller, at least one shaft, the rotor or the planet carrier of the brake force transmission unit.

The present invention covers embodiments wherein in the brake force transmission unit a reached operational state is held by suitable control of the actuator (in particular of the electrical drive) and the produced and upheld input torque of the brake force transmission unit. However, these embodiments require a permanent control of the actuator and the input torque of the brake force transmission unit. For another embodiment the invention suggests to use a holding unit in the brake force transmission unit which is (directly or indirectly) connected by a torque transferring connection to the shaft, planet carrier, rotor or first toggle lever. By a holding unit it is possible to apply a holding torque upon a holding element for fixing the rotational position of the planet carrier, shaft, rotor or first toggle lever. Accordingly, when actuating the holding unit it is possible to fix the rotational position of the planet carrier, shaft, rotor or first toggle lever (and so the bias of the brake pad) also when reducing the actuation and the input torque or even when deactivating the actuator or at the instant of a power failure.

There are a lot of options for the type of used holding unit. To mention only some non-limiting examples, the holding unit might form a locking or latching unit which e.g. fixes, locks or latches an angular position of the shaft, planet carrier, rotor or toggle lever drive. For another inventive brake force transmission unit the holding unit is an electrically actuated holding brake. In this case, the holding element might be a holding brake disc (directly or indirectly coupled to the shaft, planet carrier, rotor or first toggle lever) wherein the holding actuator in the activated state provides a holding brake force by a frictional contact between the housing of the brake force transmission unit and the holding brake disc. However, for one advantageous embodiment of the invention the holding torque is provided by a magnetic torque between the holding element and a holding actuator. Here it is possible that the magnetic torque is produced, increased or decreased by at least one electrically controlled electromagnet.

It is possible that the electrically actuated holding unit is actuated (so the holding torque is produced) when energising the holding actuator, whereas the electrically actuated holding unit is not actuated when not being energised. However, for one embodiment the electrically actuated holding unit is actuated when not being energised but released when being energised. This embodiments leads to advantages for the maintenance of an achieved state of the brake force transmission unit (so of the brake conditions at the brake pad): In the actuated state of the holding unit it is possible to reduce the electrical actuation of the brake actuator without a resulting change of the state of the brake force transmission unit (which might serve for saving energy and/or increasing the operational safety). It is also possible that despite of any power failure in the power supply for the holding unit and/or the brake actuator an achieved state of the brake force transmission unit might be upheld.

A very compact and multifunctional design of the brake force transmission unit results if a sensor is integrated into a housing of the brake force transmission unit or brake sub-assembly. Generally, any type of sensor might be used. Preferably, the sensor senses (directly or indirectly) a rotational position of movement of the shaft, planer carrier, rotor, screw roller or first toggle lever and/or an axial position or movement of the screw spindle or pushrod. By means of the sensor signal it is possible to observe the present state of the brake force transmission unit which might correlate by a given characteristic to the state, position and/or brake force of the brake pad.

Preferably, the brake force transmission unit comprises an interface which is designed and configured for connecting the brake force transmission unit to a disc brake device. The interface might be formed by a flange for connecting the housings of the brake force transmission unit and of the disc brake device. Furthermore, the interface might comprise a passage for an output element (e.g. the pushrod) for transferring the output force of the brake force transmission unit to other transmitting units and/or to the disc brake device, here the brake pads. The interface might be designed according to a standard so that it is possible to connect the brake force transmission unit to different types of brake devices. However, it is also possible that by means of the interface the brake force transmission unit is connected to a housing accommodating a transfer lever and/or the interface comprises a flange which provides the option to assemble the brake force transmission unit with the associated actuator in different orientations relative to the brake device.

It is generally possible that the state of the brake force transmission unit is solely influenced by the control of the actuator and/or the holding actuator by automatic activation by an electronic control unit and/or by activation by the driver. For another proposal of the invention, a force transferring component of the brake force transmission unit (e.g. the screw spindle, the rotor, the planet carrier or the shaft) comprises a manipulation region for manually actuating or releasing the brake force transmission unit or brake assembly. For this purpose, the component might comprise a manipulation area or surface for a suitable tool used by user. To manipulate the component it might be required to partially open the housing of the brake force transmission unit or the manipulation is provided from the outside of the housing and transferred by suitable manipulation elements through a sealed recess of the housing. By manual manipulation it is e.g. possible to actuate or release the brake force transmission unit also for a failure of the actuator and/or the holding actuator or to manually apply a parking brake or an emergency brake.

Advantageous developments of the invention result from the claims, the description and the drawings. The advantages of features and of combinations of a plurality of features mentioned at the beginning of the description only serve as examples and may be used alternatively or cumulatively.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawings.
- **Fig. 1**: schematically shows a brake assembly.
- **Fig. 2**: schematically shows a brake force transmission unit.
- **Figs. 3 to 5**: show components of the brake force transmission unit of Fig. 2 in three-dimensional views.
- **Fig. 6**: shows a three-dimensional view of a brake force transmission unit in a constructive design in a view from the left front.
- **Fig. 7**: shows the brake force transmission unit of Fig. 6 in a three-dimensional view from the left rear.
- **Fig. 8**: shows the brake force transmission unit of Figs. 6 and 7 in a three-dimensional bottom view.
- **Fig. 9**: shows the brake force transmission unit of Figs. 6 to 8 in a three-dimensional exploded view.
- **Fig. 10**: shows a longitudinal section of the brake force transmission unit of Figs. 6 to 9.
- **Fig. 11**: shows the brake force transmission unit of Figs. 6 to 10 in a front view.
- **Fig. 12**: shows another embodiment of a brake assembly in a vertical sectional view.
- **Figs. 13 and 14**: show the first and second brake sub-assemblies of the brake assembly of Fig. 12.

### DESCRIPTION OF THE DRAWINGS

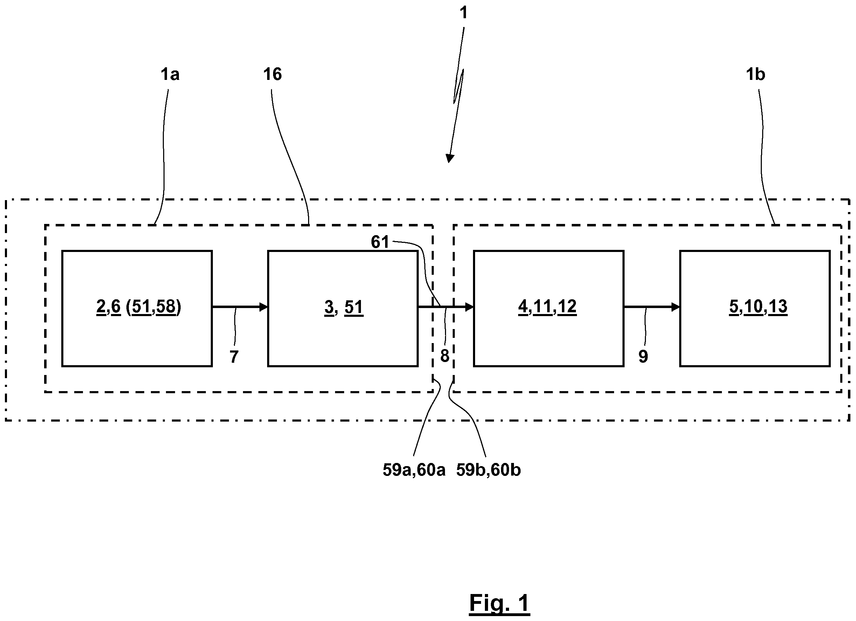

**Fig. 1** illustrates a brake assembly 1 designated for braking a wheel of a vehicle, a utility vehicle, a tractor, a trailer, an electrically driven vehicle or a hybrid vehicle. The brake assembly 1 serves for providing a service brake function and/or a parking brake function. The brake assembly 1 is actuated on the basis of a brake demand given by the driver which might be produced by the actuation of a brake pedal, a brake switch, a parking brake manipulation element and the like. It is also possible that the brake assembly 1 is automatically actuated by a control unit e.g. on the basis of an automated cruise control, for an emergency brake function, a dynamical stability system of the vehicle or an electronically controlled anti-blocking function of the wheels and the like.

The brake assembly 1 comprises a brake actuator 2, a brake force transmission unit 3, an optional further force transmitting unit 4 and a brake device 5, which are arranged in the afore-mentioned order in line in the force flow from the brake actuator 2 to the brake device 5.

The brake actuator 2 might be any brake actuator known from the prior art being able to produce an actuating force or input torque. Preferably, the brake actuator 2 is an electrical drive 6 actuated on the basis of an electrical energisation controlled by an electronic control unit. However, it is also possible that the brake actuator 2 is a conventional pneumatic brake actuator 58.The brake actuator 2 produces an input torque 7 for the brake force transmission unit 3. In particular with an increase of the force and/or a redirection of the force or transfer of a torque to an axial force, the brake force transmission unit 3 produces an output force 8. Optionally, the output force 8 is transferred by the further force transmitting unit 4 to a brake force 9 biasing brake pads 10 of the brake device 5. Here, the further force transmitting unit 4 might be formed by any force transmitting unit known by the prior art. The force transmitting unit 4 might e.g. include a pivoted brake lever 11 and/or a self-enforcing mechanism 12, cp. e.g. EP 1 977 134 B1 or US 2013/ 0008749 A1.

The brake device 5 might have any known design. Preferably, the brake device 5 is a disc brake device 13. The brake device 5 includes the components involved with the generation of the friction for providing the friction at a wheel member as the brake disc of the wheel in response to the brake force 9. In particular, the brake device 5 at least includes the calliper, the brake pads 10 and the brake disc. With respect to further details for the brake device 5 reference is e.g. be made to US 2013/ 0008749 A1.

As schematically shown in Fig. 1, the brake assembly 1 forms a constructional unit indicated with the dotted and dashed line, wherein the brake actuator 2, the brake force transmission unit 3, the further force transmitting unit 4 and the brake device 5 might form single modules communicating via mechanical interfaces for transferring the movements and forces. The modules are preferably mounted or flanged to each other. As indicated with the dashed line, it is also possible that the brake actuator 2 and the brake force transmission unit 3 build a constructional unit or module here denoted as brake sub-assembly 1a (also "first brake sub-assembly"). Alternatively or cumulatively it is possible that the further force transmitting unit 4 and the brake device 5 build a constructional unit or module here denoted as brake sub-assembly 1b (also "second brake sub-assembly"). The brake sub-assembly 1b might be manufactured and pre-mounted and distributed and stored as a normal air disc brake unit which is also known as a "ModuleT brake" or as described in US 2013/ 0008749 A1 or other known second brake sub-assemblies as mentioned in the beginning. Also the brake sub-assembly 1a might be manufactured and pre-mounted and distributed and stored as a stand-alone or pre-assembled unit. The brake sub-assemblies 1a, 1b each comprise corresponding assembly interfaces 59a, 59b by which the brake sub-assemblies 1a, 1b can be mounted and fixed to each other. Furthermore, the brake sub-assemblies 1a, 1b comprise force transfer interfaces 60a, 60b which serves for transferring the output force 8 between the brake sub-assemblies 1a, 1b. The force transfer interface 60a or 60b might e.g. be formed by a pushrod 61 extending between the brake sub-assemblies 1a, 1b, guiding devices for the pushrod 61 and/or a connecting region for the pushrod 61 provided at the brake sub-assembly 1a or brake sub-assembly 1b. If brake assemblies 1 of a first subgroup have a design as shown in Fig. 1 with the brake sub-assemblies 1a, 1b, wherein in the brake sub-assembly 1a an electrical drive 6 is used, it is possible to use the same brake sub-assembly 1b in a brake assembly 1 of a second subgroup not in combination with the brake sub-assembly 1a but together with a pneumatic brake actuator 58. In this case the pneumatic brake actuator 58 preferably does not bias the brake sub-assembly 1b via a brake force transmission unit 3. Instead, the piston stem or any pushrod of the pneumatic brake actuator 58 might be used as the pushrod 61 for transferring the output force 8 to the brake sub-assembly 1b.

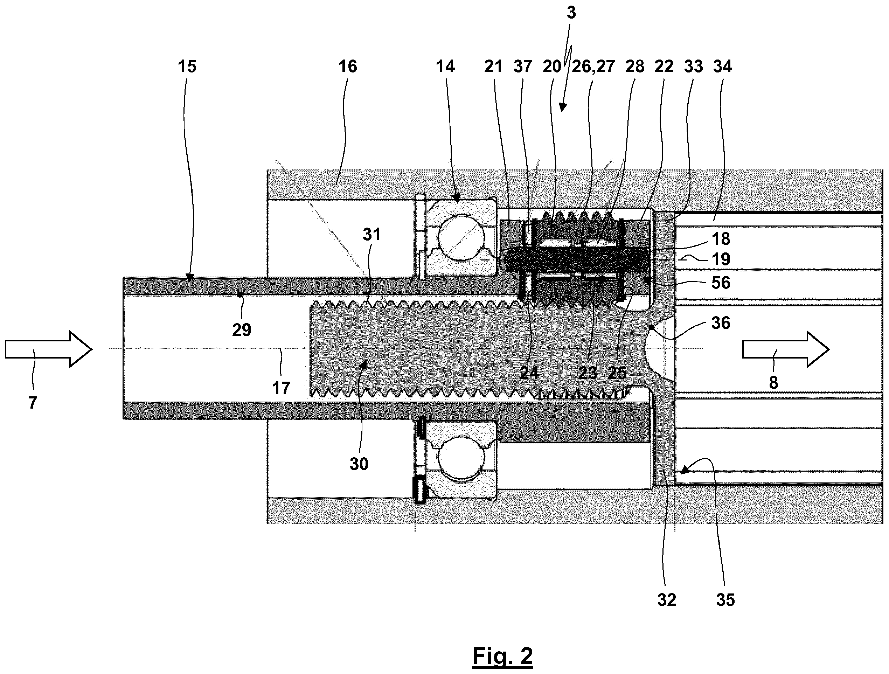

**Fig. 2** schematically shows a brake force transmission unit 3 or a part of the same. By at least one bearing 14 (here a ball bearing) a rotor shaft 15 is supported by a housing 16 for being rotated about a rotational axis 17. The rotor shaft 15 carries at least one shaft 18 which forms a rotational axis 19 for a screw roller 20. The rotational axis 19 of the shaft 18 has an orientation parallel to the rotational axis 17 of the rotor shaft 15. For the shown embodiment, the shaft 18 is in both end regions accommodated in aligned bores of radial flanges 21, 22 of the rotor shaft 15. The flanges 21, 22 form a planet carrier 56.

The screw roller 20 has a sleeve-like design and comprises an inner (here stepped) through bore 23, planar ring-shaped front faces 24, 25 and a cylindrical outer surface 26 comprising at least one groove or thread 27.

By at least one radial bearing 28, here by two cylinder bearings, the screw roller 20 is supported at the shaft 18 for being rotated about the rotational axis 19. Furthermore, the front face 24 of the screw roller 20 is supported at the flange 21 by an axial bearing 37, here an axial cylinder bearing.

It is possible that also the other flange 22 is supported by an axial bearing by the flange 22. However, for the shown embodiment the screw roller 20 is only supported with its front face 25 by a sliding contact at the flange 22 (e.g. under interposition of a slide bearing comprising a sliding disc of a suitable material). Preferably, the axial bearing 37 is used for the support of the screw roller 20 at the rotor shaft 15 in a direction being effective when transferring an actuating force. The screw roller 20 is borne and accommodated between the flanges 21, 22 without any play or only with a negligible play.

The rotor shaft 15 comprises a through bore 29. A screw spindle 30 extends through the bore 29 with a radial play. The screw spindle 30 comprises a cylindrical outer surface having at least one groove or thread 31 corresponding to the groove or thread 27 of the screw roller 20. The grooves or threads 27, 31 of the screw roller 20 and the screw spindle 30 mesh with each other for transferring a force and for generating a relative axial movement of the screw spindle 30 relative to the rotor shaft 15. The grooves or threads 27, 31 of the screw roller 20 and the screw spindle 30 might have any shape and may e.g. be cut by a usual M-thread-tool with a 60 degree thread flank angle.

One end region of the screw spindle 30 protrudes from the open end of the rotor shaft 15. In this end region the screw spindle 30 forms a collar 32. The outer circumference of the collar 32 forms at least one protrusion 33 accommodated in a corresponding axial groove 34 of the housing 16. Preferably, a number of protrusions 33 and corresponding grooves 34 form a spline fitting 35. By the at least one protrusion 33 and groove 34 or the spline fitting 35 any rotational degree of freedom of the screw spindle 30 is blocked, whereas it is possible to axially move the screw spindle 30. In the afore-mentioned end region the screw spindle 30 forms an interface 36. The interface 36 serves for coupling a pushrod 61 for forming a link to the further force transmitting unit 4. Accordingly, the interface 36 forms a force transfer interface 60a. For the shown embodiment, the interface 36 forms a bearing part of a ball joint for bearing the pushrod 61 connected in its other end region to the force transmitting unit 4. The use of a ball joint allows both an axial force transfer to the pushrod as well as a pivoting movement of the pushrod over the brake stroke of the brake assembly 1. For an alternative embodiment the pushrod may be fixedly attached in a ball-joint to the interface 36 in a known way (not shown).

The general function of the brake force transmission unit 3 of Fig. 2 is as follows:
The input torque 7 generated by the brake actuator 2 causes a rotation of the rotor shaft 15. With the rotor shaft 15 also the shaft 18 and the at least one screw roller 20 rotate about the rotational axis 17. Due to the meshing engagement of the groove or thread 27 of the at least one screw roller 20 with the groove or thread 31 of the screw spindle 30, the caused rotation of the rotational axis 19 of the shaft 18 leads to an axial movement of the screw spindle 30 and the generation of the output force 8 which is then transferred to the further force transmitting unit 4.

For the shape and evolution of the grooves or threads 27, 31 of the screw roller 20 and the screw spindle 30 for transferring the rotational movement of the rotor shaft 15 with the screw rollers 20 to the axial movement of the screw spindle 30, the person with skill in the art working in the field of screw rollers will know different options. The following examples are only non-limiting examples:
- It is e.g. possible that the screw roller 20 comprises a plurality of parallel grooves or threads 27 having no pitch or inclination, whereas the screw spindle 30 has one helical groove or thread 31 having an inclination or pitch.
- However, it is also possible that the screw roller 20 comprises only one helical groove or thread 27 having an inclination or pitch corresponding to the inclination or pitch of the screw spindle 30. In this case the rotational speed of the screw roller 20 does not only depend on the rotation of the rotational axis 19 of the shaft 18 about the rotational axis 17 of the rotor shaft 15 as shown in Fig. 2 but from another boundary condition of the screw roller 20. For one non-limiting example the screw roller 20 might have a gear meshing with a corresponding ring gear or hollow wheel formed by the housing 16.

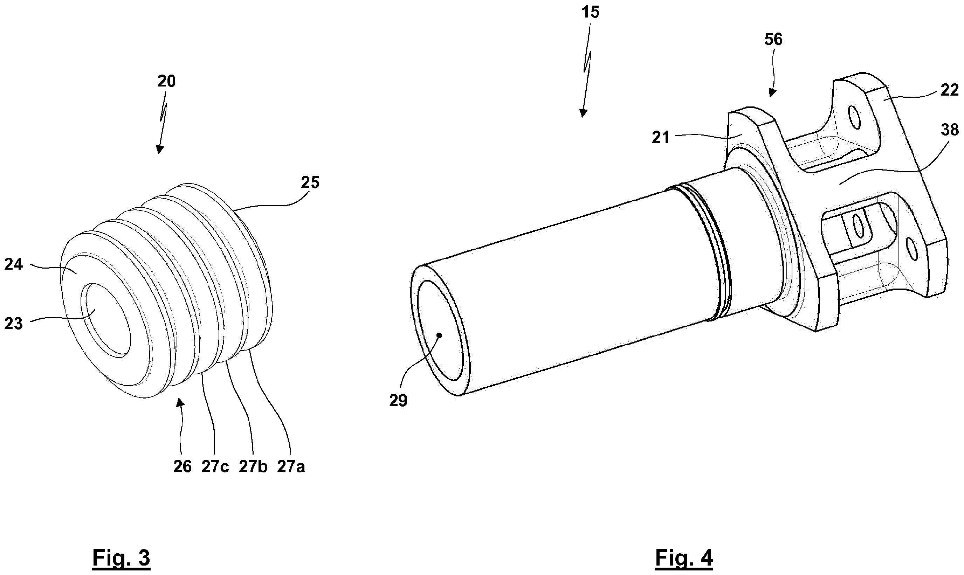

**Fig. 3** shows the screw roller 20 in a three-dimensional view. Here, the outer surface 26 comprises a plurality of parallel non-inclined grooves or threads 27a, 27b, 27c...

**Fig. 4** shows the rotor shaft 15 in a three-dimensional view. Here, the flanges 21, 22 are not formed by ring-shaped discs but have a star-like design with three arms each designated for supporting one associated shaft 18 with a screw roller 20. Accordingly, it is possible to use three screw rollers 20 evenly distributed in circumferential direction around the screw spindle 30 for allowing a force division to three contact regions of the screw rollers 20 with the screw spindle 30.

According to Fig. 4, reinforcing struts 38 connect the flanges 21, 22 with each other so that the screw rollers 20 are housed in a cage-like fashion in the rotor shaft 15.

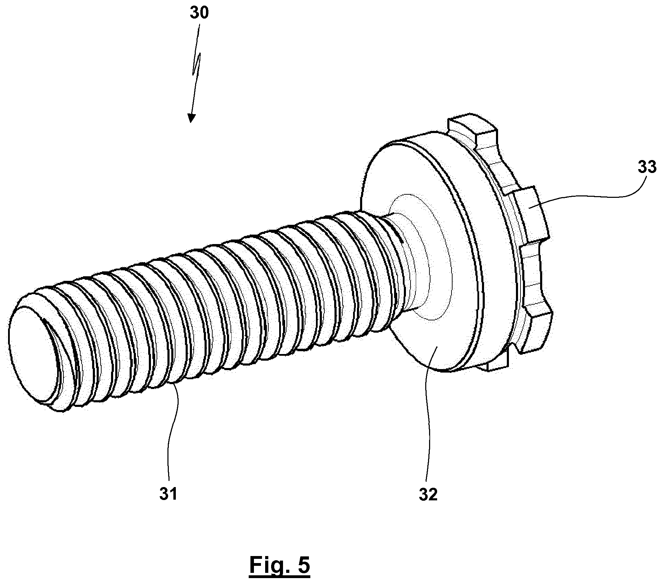

**Fig. 5** shows the screw spindle 30 with the helical groove or thread 31 and the collar 32 with radial protrusions 33 for forming the spline fitting 35 together with the housing 16.

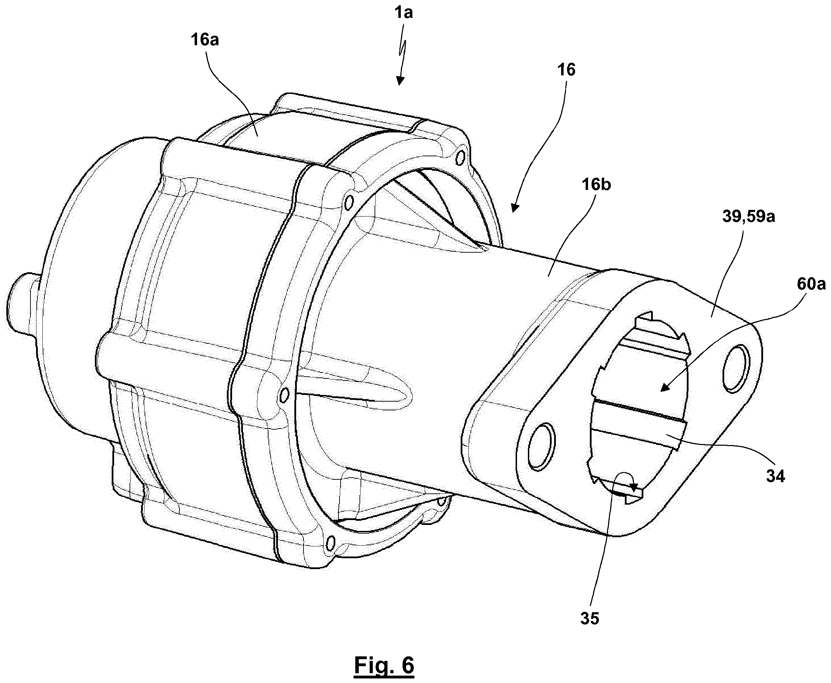

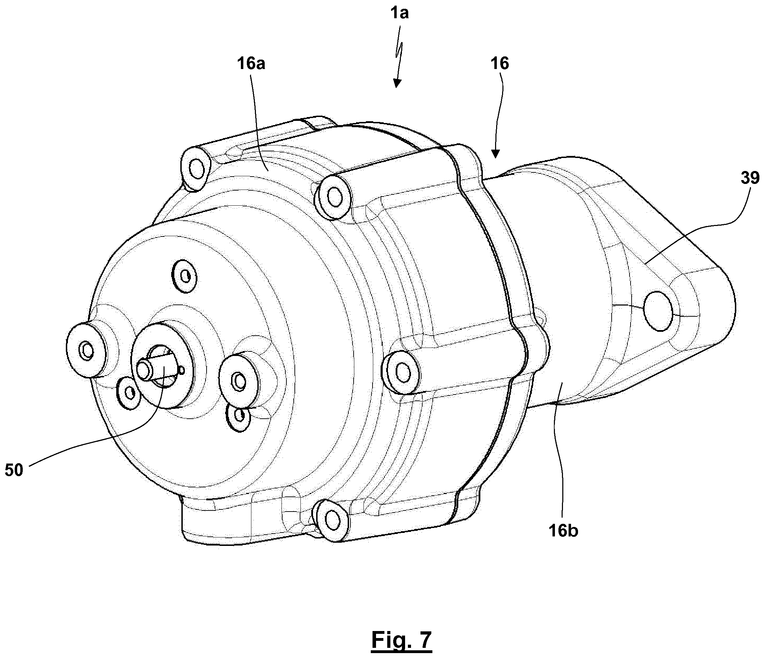

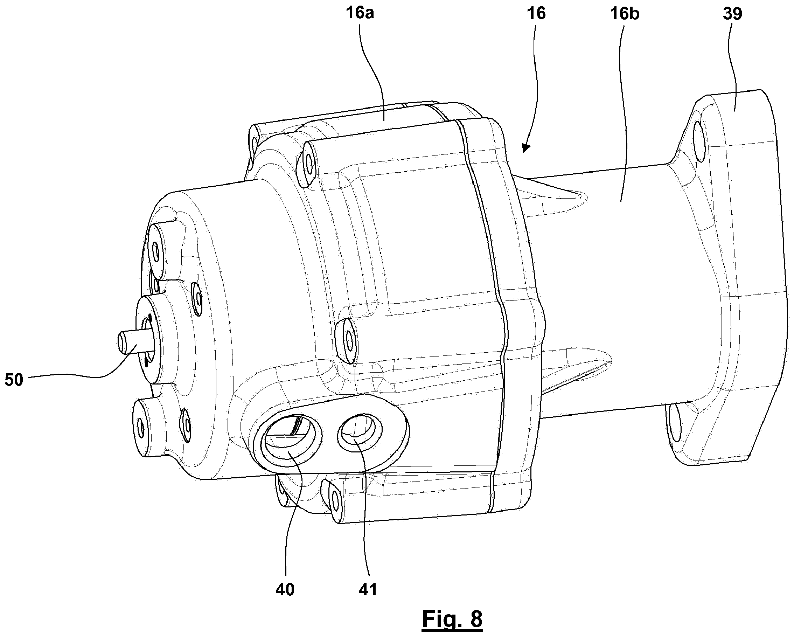

**Figs. 6 to 8** show three-dimensional views of a brake assembly 1a including both a brake actuator 2 and a brake force transmission unit 3 integrated in a common multi-part housing 16 (cp. also the brake assembly 1a shown with dashed line in Fig. 1). The housing 16 forms a flange 39 for connecting the housing 16 to a corresponding flange of a further force transmitting unit 4, directly to a brake device 5 or the second brake sub-assembly 1b. The flange 39 forms the assembly interface 59a. A pushrod 61 (here not shown) connected to the interface 36 of the screw spindle 30 extends through a bore of the flange 39 for transferring the movement and force to the further force transmitting unit 4, brake device 5 or the second brake sub-assembly 1b. The bore form the force transmission interface 60a. At the bottom (which is not necessarily the case) the housing 16 comprises ports or openings 40, 41 forming another interface of the brake assembly 1a. Via the ports or openings 40, 41 a power supply and/or electrical control signal are/is transferred to the brake actuator 2, and/or a power supply and/or an output signal of a sensor can be transferred.

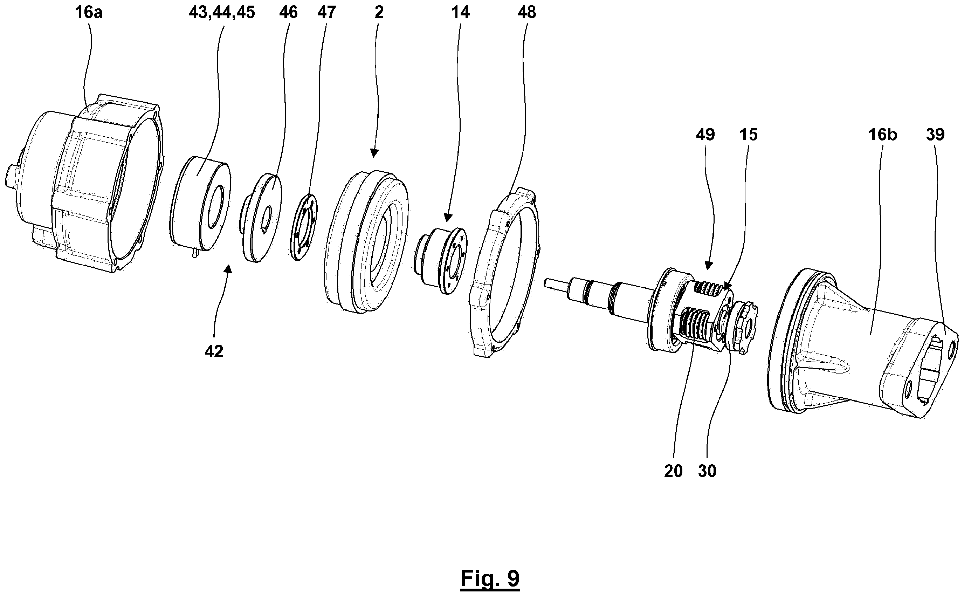

**Fig. 9** shows components of the brake sub-assembly 1a in a three-dimensional exploded view. These are a first housing part 16a, an actuator member 43 of a holding unit 42 (here formed by an electrically actuated holding brake 45 with a holding actuator 44), a holding element 46 (in particular a holding brake disc), a securing ring 47, the bearing 14, a clamping ring 48 of the housing 16, a subassembly unit 49 with the rotor shaft 15, three screw rollers 20 and the screw spindle 30 and a housing part 16b which can be assembled in the afore-mentioned order to the brake sub-assembly 1a.

A sensor 51 might be integrated into the housing. In this case the power supply of the sensor 51 and/or the output signal of the sensor 51 can be passed by a signal line through the ports or openings 40, 41. However, for the shown embodiment an end region of the rotor shaft 15 protrudes (under interposition of a suitable sealing) out of the housing 16 where the rotor shaft 15 forms a connecting region 50 for a sensor 51 which is attached to the housing 16. Preferably, the sensor 51 is an angular sensor or encoder sensing the rotational angle of the rotor shaft 15. It is possible that the sensor 51 is covered by another housing part or lid attached to the housing part 16a (here not shown).

The holding brake 45 comprises the holding element 46 fixedly mounted to the rotor shaft 15 and rotating therewith. Furthermore, the holding brake 45 comprises a holding brake actuating element 52 which is electrically controlled through the port or opening 41. The design and control of the holding brake 45 is such that it is possible to generate a braking force between the holding brake actuating element 52 and the holding element 46 for fixing the rotor shaft 15 against rotation. It is possible that the holding brake 45 is a frictional holding brake 45 such that for generating the holding torque the holding brake actuating element 52 is pressed against the holding element 46.

For the shown embodiment the holding brake force is generated by magnetic forces. By permanent magnets acting between the holding element 46 and the holding brake actuating element 52, without an electrical energisation of the holding brake actuating element 52 a magnetic holding torque is produced. It is possible to reduce or remove the torque produced by the permanent magnets by energisation of the holding brake actuating elements 52 which causes a counteracting magnetic field reducing or removing the magnetic force between the holding brake actuating element 52 and the holding element 46 due to the permanent magnets. The holding brake actuating element 52 is fixedly mounted to the housing part 16b. There is only a small air gap between the holding brake actuating element 52 and the holding element 46.

For another embodiment the holding brake 45 is a spring-activated holding brake wherein in the electrically non-activated state a spring of the holding brake 45 provides a normal force leading to a friction brake force of the holding brake 45. For providing the activated state, an electric magnet is energized. In the energized state the electric magnet produces an electromagnetic force completely or partially counteracting the spring force. Accordingly, in the activated state of the holding brake 45 the normal force is reduced or removed so that also the friction brake force is reduced or removed. However, the function might also be inverted such that the spring releases the friction elements of the holding brake 45, whereas the electromagnetic force is responsible for producing the normal force and the friction brake force. Here the normal force and the friction brake force is produced between a part fixed to the housing and another part fixedly mounted to the rotor shaft 15. The two mentioned friction elements might be pressed against each other in a direction parallel to the longitudinal axis 17 or in radial direction towards each other. The holding brake 45 might also comprise a hand release accessible from the outside of the housing 16 for manually releasing the holding brake 45.

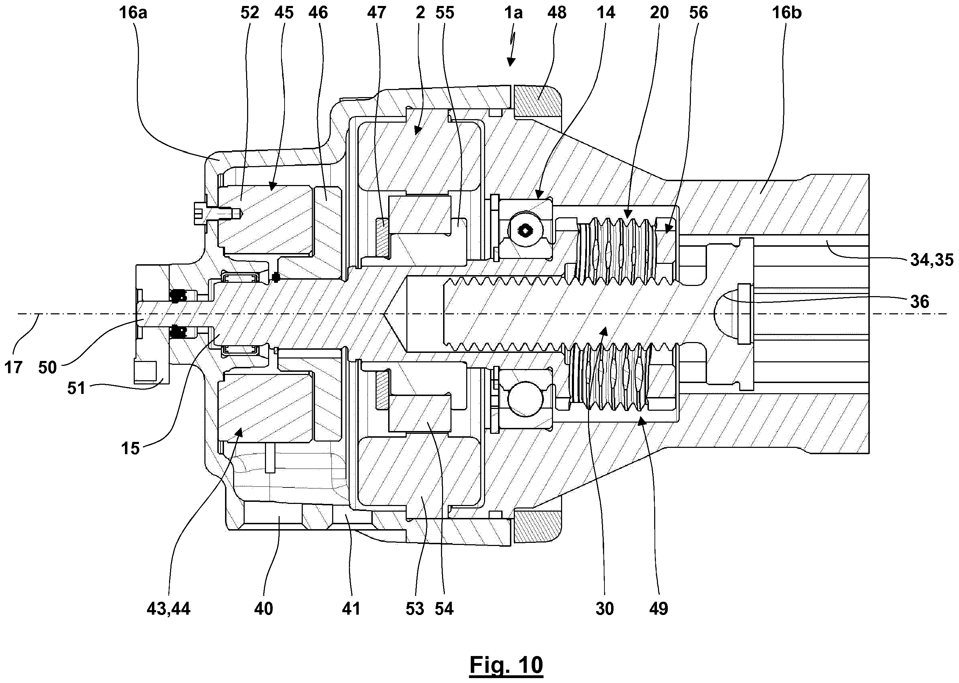

The holding brake actuating element 52 and the holding element 46 are in a first approximation formed by sleeve-like or ring-shaped components, whereas it is possible that according to **Fig. 10** the holding element 46 is L-shaped in a semi-longitudinal section. Here, the vertical leg of the L has an orientation perpendicular to the rotational axis 17 whereas the horizontal leg of the L has an orientation parallel to the rotational axis 17 and extends within an inner bore of the holding brake actuating element 52.

The brake actuator 2 comprises a stator ring 53 of suitable design for generating a rotating electromagnetic field. The control signal and/or a power supply is transferred to the stator ring 53 through the opening or port 41. With a small radial gap a ring-shaped or sleeve-like rotor 54 (also formed in per se known way) extends within the stator ring 53. The rotating field controlled at the stator ring 53 causes a rotation and an input torque which is applied upon the rotor 54. The rotor 54 is fixedly mounted to the rotor shaft 15 which is here provided by an intermediate body 55. In axial direction the rotor 54 is clamped between a radial collar of the intermediate body 55 and the securing ring 47.

It is possible that the rotor shaft 15 comprises a manipulation region (here not shown). When opening the housing part 16a (or through an opening of the housing 16) it is possible to engage a tool with the manipulation region for manually rotating the screw spindle 30 for manually releasing or activating the brake device 5.

It is possible that at least one further force transmitting unit is integrated into the force flow between the electrical drive and the disc brake device, in particular downstream from the brake force transmission unit. To mention only some non-limiting examples, a force transmitting unit might be formed by a brake lever having an eccentric support which is actuated by the brake force transmission unit and which actuates a brake pad of the disc brake device (see e.g. the lever used according to EP 1 977 134 B1 or US 2013/0008749 A1) and/or a self-enforcing mechanism (see e.g. the ramps used according to EP 1 977 134 B1 or US 2013/0008749 A1).

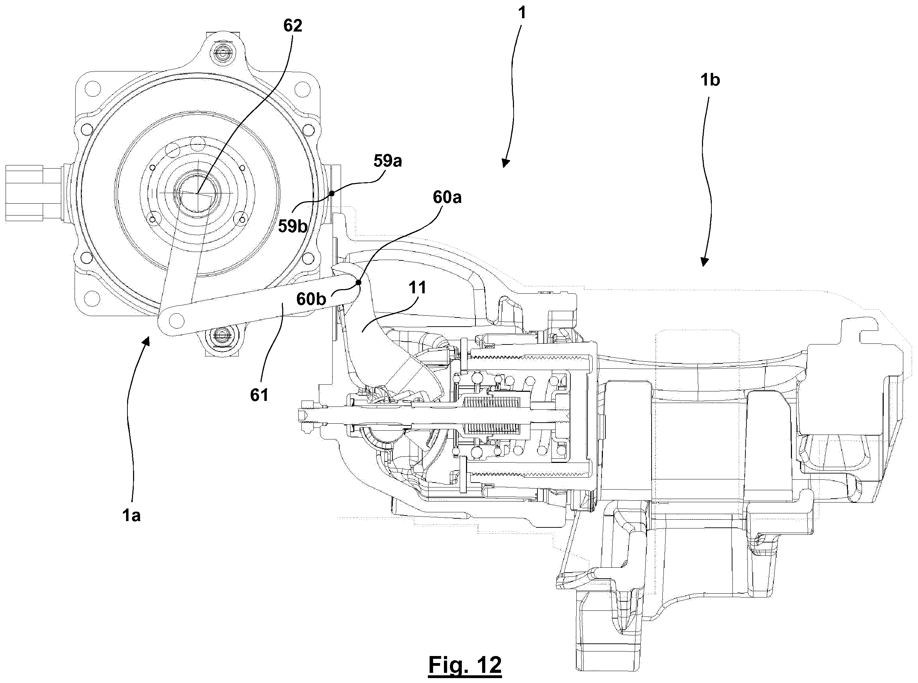

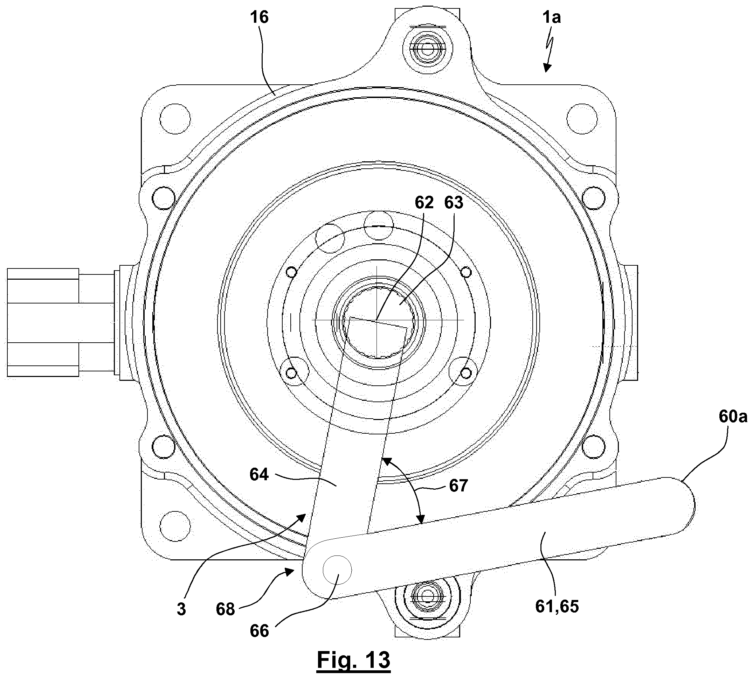

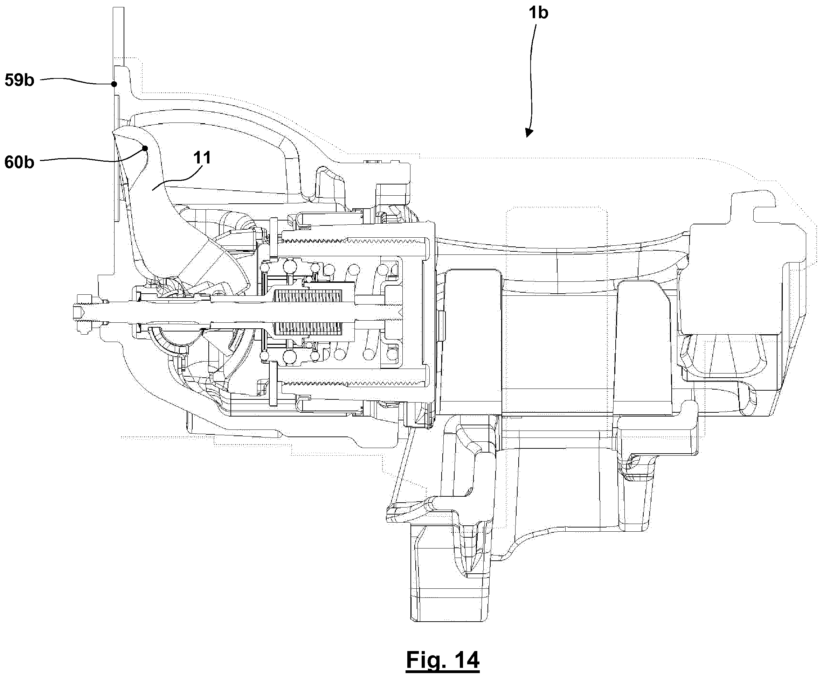

**Fig. 12** shows another brake assembly 1 consisting of two brake sub-assemblies 1a, 1b which are shown in **Figs. 13** **and** **14** in disassembled state. Here, the brake sub-assembly 1a comprises the pushrod 61. One end region of the pushrod 61 forms the force transfer interface 60a which is coupled to the force transfer interface 60b of an eccentrically pivoted brake lever 11 of the brake sub-assemblies 1b. The brake sub-assemblies 1a, 1b are mounted with each other by their assembly interfaces 59a, 59b. The brake assembly 1 is mounted to a vehicle chassis. A brake caliper of the brake sub-assembly 1b spans over a brake disc associated with a vehicle wheel. The rotational axis of the brake disc is horizontal in Fig. 12 and lying in the drawing plane. The brake sub-assembly 1a is arranged with an offset in vertical direction or above the brake sub-assembly 1a. A longitudinal axis of the brake sub-assembly 1a forming a rotational axis 62 has an orientation vertical to the drawing plane of Fig. 12, so also perpendicular to the rotational axis of the brake disc.

Fig. 13 shows a front view of the brake sub-assembly 1a. A driving shaft 63 is (under fixation against rotation) coupled to a first toggle lever 64. In the end region facing away from the driving shaft 63 the first toggle lever 64 is coupled to a second toggle lever 65 by a toggle joint 66. The second toggle lever 65 forms the pushrod 61. The toggle levers 64, 65 form a toggle angle 67. In the assembled state of the brake assembly 1 a rotation of the driving shaft 63 leads to a rotation of the first toggle lever 64, a change of the toggle angle 67 and a movement of the toggle lever 65 which is transferred to the brake lever 11 by the force transfer interfaces 60a, 60b. The movement of the second toggle lever 65 comprises a component with a nearly translational movement (e.g. a movement corresponding to a pivoting movement of the brake lever 11 when neglecting the movement of the force transmitting interface 60b of the brake lever 11 on a segment of a circle) and a component with a rotation of the toggle lever 65. The transfer characteristic of the driving torque of the driving shaft 63 to the brake lever 11 (and in the end to the brake pads) is nonlinear as can be calculated from the given kinematics. The toggle levers 64, 65 and the toggle joint 66 build a toggle lever drive 68. The toggle levers 64, 65 move in a plane having an orientation in vertical direction and parallel to the rotational axis of the brake disc.

It is possible that the driving shaft 63 is directly driven by an electrical drive 6. However, preferably a planetary gearset is located in the force flow between the electrical drive 6 and the driving shaft 63. Here, the driving shaft 63 can be coupled to any component of the planetary gearset, i.e. the sun gear, the planet carrier or the internal annulus gear wheel.

Concerning the inner construction, the functions and the components of the brake sub-assembly 1b shown in Fig. 14, reference is made to known brake sub-assemblies 1b as specified in the beginning for the "second brake sub-assembly".

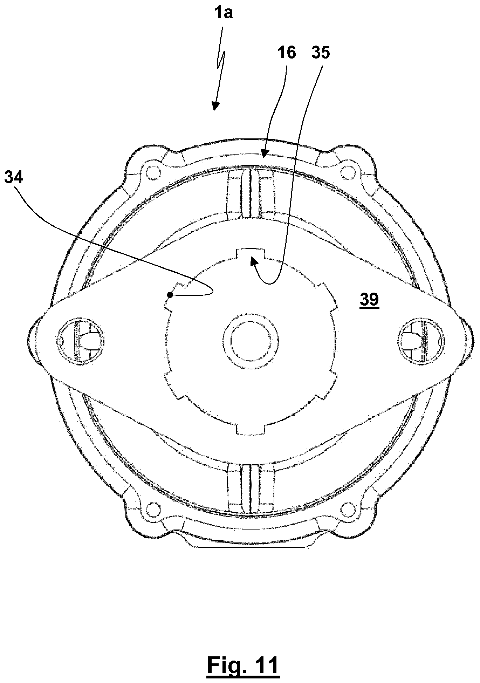

For the embodiment of Fig. 13, the brake force transmission unit 3 comprises the toggle lever drive 68 and any additional transmission system or planetary gearset. As schematically shown in Fig. 2, it is possible to use the brake sub-assembly 1b of Fig. 14 together with the brake sub-assembly of Fig. 13, so together with an electrical drive 6 and the toggle lever drive 68 (and an additional planetary gearset). Without any adaptations required or with an adaptation of the assembly interface 59b and/or the adaptation of a force transfer interface 60b it is possible to use the same type of brake sub-assembly 1b as shown in Fig. 14 together with another brake sub-assembly 1a, e.g. together with a brake sub-assembly as shown in the Figs. 2 to 11. However, also without any adaptations or with adaptations of the assembly interface 59b and/or the force transfer interface 60b it is possible to use the same brake sub-assembly 1b of Fig. 14 together with a conventional pneumatic brake actuator 58. In this case, the housing of the pneumatic brake actuator is directly mounted to the assembly interface 59b of the brake sub-assembly 1b and the pushrod of the pneumatic brake actuator 58 is coupled to the force transfer interface 60b of the brake lever 11. However, it is also possible that any type of known transmission is interposed between the pneumatic brake actuator 58 and the brake lever 11. Accordingly, it is possible to use the same type of brake sub-assembly 1b in brake assemblies with different types of drives.

### LIST OF REFERENCE NUMERALS

- 1: brake assembly
- 1a: brake sub-assembly
- 1b: brake sub-assembly
- 2: brake actuator
- 3: brake force transmission unit
- 4: further force transmitting unit
- 5: brake device
- 6: electrical drive
- 7: input force
- 8: output force
- 9: brake force
- 10: brake pad
- 11: brake lever
- 12: self-enforcing mechanism
- 13: disc brake device
- 14: bearing
- 15: rotor shaft
- 16: housing
- 16a: housing part
- 16b: housing part
- 17: rotational axis of the rotor shaft
- 18: shaft
- 19: rotational axis of the shaft
- 20: screw roller
- 21: flange of the rotor shaft
- 22: flange of the rotor shaft
- 23: bore of the screw roller
- 24: front face of the screw roller
- 25: front face of the screw roller
- 26: outer surface of the screw roller
- 27: groove or thread
- 28: bearing
- 29: bore
- 30: screw spindle
- 31: groove or thread
- 32: collar
- 33: protrusion
- 34: groove
- 35: spline fitting
- 36: interface
- 37: bearing
- 38: struts
- 39: flange
- 40: port or opening
- 41: port or opening
- 42: holding unit
- 43: actuator member
- 44: holding actuator
- 45: holding brake
- 46: holding element
- 47: securing ring
- 48: clamping ring
- 49: subassembly unit
- 50: connecting region
- 51: sensor
- 52: holding brake actuating element
- 53: stator ring
- 54: rotor
- 55: intermediate body
- 56: planet carrier
- 58: pneumatic brake actuator
- 59a: assembly interface
- 59b: assembly interface
- 60a: force transfer interface
- 60b: force transfer interface
- 61: pushrod
- 62: rotational axis
- 63: driving shaft
- 64: first toggle lever
- 65: second toggle lever
- 66: toggle joint
- 67: toggle angle
- 68: toggle lever drive

## Claims

1. Brake sub-assembly (1a) for a brake system of a vehicle comprising
a) an electrical drive (6) and
b) a brake force transmission unit (3),
c) wherein the brake sub-assembly (1a) forms a mounting unit comprising
ca) an assembly interface (59a) for mounting the brake sub-assembly (1a) to another brake sub-assembly (1b) which comprises a brake device (5) and a further force transmitting unit (4) and
cb) a force transfer interface (60) for transferring an output force (8) from the brake sub-assembly (1a) to the brake sub-assembly (1b)
**characterized in that**
d) the brake force transmission unit (3) comprises a toggle lever drive (68) with
da) a first toggle lever (64) having a fixed rotational axis (62) and being driven by the electrical drive (6), a driving shaft (63) being coupled under fixation against rotation to the first toggle lever (64), the driving shaft (63) being directly driven by the electrical drive (6) or a planetary gearset or any other additional transmission system being located in the force flow between the electrical drive (6) and the driving shaft (63) and
db) a second toggle lever (65) which is pivotally linked to the first toggle lever (64) by a toggle joint (66) and which forms a pushrod (61), one end region of the pushrod (61) forming the force transfer interface (60a) which can be coupled to the force transfer interface (60b) of a pivoted brake lever (11) of the brake sub-assembly (1b).

2. Group of brake assemblies (1) wherein the brake assemblies (1) comprise brake sub-assembly (1b) with the same brake devices (5) and the same force transmitting units (4), said force transmitting units (4) each comprising a brake lever (11) forming an interface for an actuating pushrod (61), wherein
a) brake assemblies (1) of a first subgroup comprise a pneumatic brake actuator (58) for actuating the pushrod (61) and
b) brake assemblies (1) of a second subgroup comprise a brake sub-assembly (1a) comprising
ba) an electrical drive (6) and
bb) a brake force transmission unit (3),
bc) wherein the brake sub-assembly (1a) forms a mounting unit comprising
- an assembly interface (59a) for mounting the brake sub-assembly (1a) to another brake sub-assembly (1b) which comprises a brake device (5) and a further force transmitting unit (4) and
- a force transfer interface (60) for transferring an output force (8) from the brake sub-assembly (1a) to the brake sub-assembly (1b)
bd) the brake force transmission unit (3) comprises a toggle lever drive (68) with
- a first toggle lever (64) having a fixed rotational axis (62) and being driven by the electrical drive (6) and
- a second toggle lever (65) which is pivotally linked to the first toggle lever (64) by a toggle joint (66) and which forms a pushrod (61),
the brake assemblies (1) of the second subgroup comprising a brake sub-assembly (1a) of claim 1.

3. Brake sub-assembly (1a) or group of brake assemblies (1) of claim 1 or 2 with a brake force transmission unit (3) arranged in the force flow from the electrical drive (6) to the pushrod (61), **characterized in that** a screw roller (20) and a screw spindle (30) which meshes with the screw roller (20) are arranged in the force flow of the brake force transmission unit (3).

4. Brake sub-assembly (1a) or group of brake assemblies (1) of claim 3, **characterized in that**
a) the screw roller (20) is supported by a shaft (18) for being rotated about an axis (19) of the shaft (18),
b) the shaft (18) is supported for being rotated about a rotational axis (17) and
c) the driven rotation of the shaft (18) about the rotational axis (17) with a simultaneous rotation of the screw roller (20) about the axis (19) of the shaft (18) is transformed by the meshing interaction between the screw roller (20) and the screw spindle (30) into a translational movement of the screw spindle (30).

5. Brake sub-assembly (1a) or group of brake assemblies (1) of claim 4, **characterized in that** a planet carrier (56) is supported for being rotated about the rotational axis (17) wherein the planet carrier (56) carries at least two shafts (18) each supporting one screw roller (20) for being rotated, said screw rollers (20) each meshing with the screw spindle (30).

6. Brake sub-assembly (1a) or group of brake assemblies (1) of claim 4 or 5, **characterized in that** the shaft (18) or the planet carrier (56) is connected by a torque transferring connection to a rotor (54).

7. Brake sub-assembly (1a) or group of brake assemblies (1) of one of claims 3 to 6, **characterized in that** the screw spindle (30) is connected to a housing (16) of the brake force transmission unit (3) by a spline fitting (35) wherein the spline fitting (35)
a) blocks a rotational movement of the screw spindle (30) relative to the housing (16) and
b) permits a translational movement of the screw spindle (30) relative to the housing (16).

8. Brake sub-assembly (1a) or group of brake assemblies (1) of one of claims 3 to 7, **characterized in that** the electrical drive (6) directly or indirectly drives the screw roller (20), at least one shaft (18), the rotor (54) or the planet carrier (56) of the brake force transmission unit (3).

9. Brake sub-assembly (1a) or group of brake assemblies (1) of one of claims 1 to 8, **characterized in that** a holding unit (42) is connected by a torque transferring connection to the or a shaft (18), planet carrier (56), rotor (54) or first toggle lever (64) wherein by a holding actuator (44) it is possible to apply a holding torque upon a holding element (46) for fixing the rotational position of the shaft (18), planet carrier (56), rotor (54) or first toggle lever (64).

10. Brake sub-assembly (1a) or group of brake assemblies (1) of claim 9, **characterized in that** the holding unit (42) is an electrically actuated holding brake (45).

11. Brake sub-assembly (1a) or group of brake assemblies (1) of claim 10, **characterized in that** the electrically actuated holding brake (45) is actuated when not energized but released when energized.

12. Brake sub-assembly (1a) or group of brake assemblies (1) of one of claims 1 to 11, **characterized in that** a sensor (51) is integrated into a housing (16) of the brake force transmission unit (3) or of the brake sub-assembly (1a), said sensor (51) sensing directly or indirectly
a) a rotational position or movement of the shaft (18), planet carrier (56), rotor (54), screw roller (20) or first toggle lever (64) and/or
b) an axial position or movement of the screw spindle (30) or second toggle lever (65).

13. Brake sub-assembly (1a) or group of brake assemblies (1) of one of claims 1 to 12, **characterized by** an interface (36) designed and configured for connecting the brake force transmission unit (3) to a disc brake device (5) or a brake sub-assembly (1a).

14. Brake sub-assembly (1a) or group of brake assemblies (1) of one of claims 1 to 13, **characterized by** a manipulation region for manually actuating or releasing the brake force transmission unit (3) or brake assembly (1).

15. Brake sub-assembly (1a) or group of brake assemblies (1) of one of claims 1 to 14, **characterized in that**
a) the brake device (5) is a disc brake device (13) and
b) the force transmitting unit (4) comprises
ba) a brake lever (11) which is actuated by the brake force transmission unit (3) and which actuates a brake pad (10) of the disc brake device (13) via an eccentric and/or
bb) a self-enforcing mechanism (12).

## Patentansprüche

1. Bremsen-Unterbaugruppe (1a) für ein Bremssystem eines Fahrzeugs mit
a) einem elektrischen Antrieb (6) und
b) einer Bremskraft-Übertragungseinheit (3),
c) wobei die Bremsen-Unterbaugruppe (1a) eine Montageeinheit bildet mit
ca) einem Montage-Interface (59a) zum Montieren der Bremsen-Unterbaugruppe (1a) mit einer anderen Bremsen-Unterbaugruppe (1b), die eine Bremseinrichtung (5) aufweist und eine weitere Kraftübertragungseinheit (4) und
cb) einem Kraftübertragungs-Interface (60) zum Übertragen einer Ausgangskraft (8) der Bremsen-Unterbaugruppe (1a) an die Bremsen-Unterbaugruppe (1b),
**dadurch gekennzeichnet, dass**
d) die Bremskraft-Übertragungseinheit (3) einen Kniehebeltrieb (68) aufweist mit
da) einem ersten Kniehebel (64), der eine feste Rotationsachse (62) aufweist und von dem elektrischen Antrieb (6) angetrieben wird, eine Antriebswelle (63) aufweist, die drehfest mit dem ersten Kniehebel (64) gekoppelt ist, wobei die Antriebswelle (63) direkt von dem elektrischen Antrieb (6) angetrieben ist oder über einen Planetensatz angetrieben ist oder durch ein anderes zusätzliches Getriebesystem angetrieben ist, welches in dem Kraftfluss zwischen dem elektrischen Antrieb (6) und der Antriebswelle (63) angeordnet ist, und
db) einem zweiten Kniehebel (65), der über ein Kniegelenk (66) verschwenkbar an dem ersten Kniehebel (64) angelenkt ist und eine Schubstange (61) bildet, wobei ein Endbereich der Schubstange (61) das Kraftübertragungs-Interface (60a) bildet, welches mit dem Kraftübertragungs-Interface (60b) eines verschwenkten Bremshebels (11) der Bremsen-Unterbaugruppe (1b) gekoppelt werden kann.

2. Gruppe von Bremsbaugruppen (1), wobei die Bremsbaugruppen (1) Brems-Unterbaugruppen (1b) mit denselben Bremseinrichtungen (5) und denselben Kraftübertragungseinheiten (4) aufweisen und die Kraftübertragungseinheiten (4) jeweils einen Bremshebel (11) aufweisen, der ein Interface für eine betätigende Schubstange (61) bildet, wobei
a) Bremsbaugruppen (1) einer ersten Teilgruppe einen pneumatischen Bremsaktuator (58) zur Betätigung der Schubstange (61) aufweisen und
b) Bremsbaugruppen (1) einer zweiten Teilgruppe eine Brems-Unterbaugruppe (1a) aufweisen mit
ba) einem elektrischen Antrieb (6) und
bb) einer Bremskraft-Übertragungseinheit (3),
bc) wobei die Bremsen-Unterbaugruppe (1a) eine Montageeinheit bildet mit
- einem Baugruppen-Interface (59a) zur Montage der Bremsen-Unterbaugruppe (1a) mit einer anderen Bremsen-Unterbaugruppe (1b), die eine Bremseinrichtung (5) und eine weitere Kraftübertragungseinheit (4) aufweist, und
- einem Kraftübertragungs-Interface (60) zum Übertragen einer Ausgangskraft (8) der Bremsen-Unterbaugruppe (1a) an die Bremsen-Unterbaugruppe (1b),
bd) wobei die Bremskraft-Übertragungseinheit (3) einen Kniehebeltrieb (68) aufweist mit
- einem ersten Kniehebel (64), der eine feste Rotationsachse (62) aufweist und von dem elektrischen Antrieb (6) angetrieben ist, und
- einem zweiten Kniehebel (65), der mit einem Kniegelenk (66) verschwenkbar an dem ersten Kniehebel (64) angelenkt ist und der eine Schubstange (61) bildet,
wobei die Bremsbaugruppen (1) der zweiten Teilgruppe eine Bremsen-Unterbaugruppe (1a) nach Anspruch 1 aufweisen.

3. Bremsen-Unterbaugruppe (1a) oder Gruppe von Bremsbaugruppen (1) nach Anspruch 1 oder 2 mit einer Bremskraft-Übertragungseinheit (3), die in dem Kraftfluss zwischen dem elektrischen Antrieb (6) und der Schubstange (61) angeordnet ist, **dadurch gekennzeichnet, dass** ein Gewinderoller (20) und eine Gewindespindel (30), die mit dem Gewinderoller (20) kämmt, in dem Kraftfluss der Bremskraft-Übertragungseinheit (3) angeordnet sind.

4. Bremsen-Unterbaugruppe (1a) oder Gruppe von Bremsbaugruppen (1) nach Anspruch 3, **dadurch gekennzeichnet, dass**
a) der Gewinderoller (20) durch eine Welle (18) drehbar um eine Achse (19) der Welle (18) gelagert ist,
b) die Welle (18) drehbar um eine Rotationsachse (17) gelagert ist und
c) die angetriebene Drehung der Welle (18) um die Rotationsachse (17) mit simultaner Rotation des Gewinderollers (20) um die Achse (19) der Welle (18) durch die wälzende Wechselwirkung zwischen dem Gewinderoller (20) und der Gewindespindel (30) in eine translatorische Bewegung der Gewindespindel (30) umgewandelt wird.

5. Bremsen-Unterbaugruppe (1a) oder Gruppe von Bremsbaugruppen (1) nach Anspruch 4, **dadurch gekennzeichnet, dass** ein Planetenträger (56) drehbar um die Rotationsachse (17) gelagert ist, wobei der Planetenträger (56) zumindest zwei Wellen (18) trägt, die jeweils einen Gewinderoller (20) drehbar lagern, wobei die Gewinderoller (20) jeweils mit der Gewindespindel (30) in Wälzverbindung stehen.

6. Bremsen-Unterbaugruppe (1a) oder Gruppe von Bremsbaugruppen (1) nach Anspruch 4 oder 5, **dadurch gekennzeichnet, dass** die Welle (18) oder der Planetenträger (56) mittels einer ein Moment übertragenden Verbindung mit einem Rotor (54) verbunden ist.

7. Bremsen-Unterbaugruppe (1a) oder Gruppe von Bremsbaugruppen (1) nach einem der Ansprüche 3 bis 6, **dadurch gekennzeichnet, dass** die Gewindespindel (30) mit einem Gehäuse (16) der Bremskraft-Übertragungseinheit (3) mittels einer Keilwellenverbindung oder Zahnwellenverbindung (35) verbunden ist, die
a) eine Drehbewegung der Gewindespindel (30) gegenüber dem Gehäuse (16) blockiert und
b) eine translatorische Bewegung der Gewindespindel (30) gegenüber dem Gehäuse (16) ermöglicht.

8. Bremsen-Unterbaugruppe (1a) oder Gruppe von Bremsbaugruppen (1) nach einem der Ansprüche 3 bis 7, **dadurch gekennzeichnet, dass** der elektrische Antrieb (6) direkt oder indirekt den Gewinderoller (20), zumindest eine Welle (18), den Rotor (54) oder den Planetenträger (56) der Bremskraft-Übertragungseinheit (3) antreibt.

9. Bremsen-Unterbaugruppe (1a) oder Gruppe von Bremsbaugruppen (1) nach einem der Ansprüche 1 bis 8, **dadurch gekennzeichnet, dass** eine Halteeinheit (42) durch eine ein Moment übertragende Verbindung mit der oder einer Welle (18), dem Planetenträger (56), dem Rotor (54) oder dem ersten Kniehebel (64) verbunden ist, wobei es möglich ist, durch einen Halte-Aktuator (44) ein Haltemoment auf ein Halteelement (46) aufzubringen, um die Drehstellung der Welle (18), des Planetenträgers (56), des Rotors (54) oder des ersten Kniehebels (64) zu fixieren.

10. Bremsen-Unterbaugruppe (1a) oder Gruppe von Bremsbaugruppen (1) nach Anspruch 9, **dadurch gekennzeichnet, dass** die Halteeinheit (42) eine elektrisch betätigte Haltebremse (45) ist.

11. Bremsen-Unterbaugruppe (1a) oder Gruppe von Bremsbaugruppen (1) nach Anspruch 10, **dadurch gekennzeichnet, dass** die elektrisch betätigte Haltebremse (45) betätigt wird, wenn diese nicht energetisch beaufschlagt ist, und mit energetischer Beaufschlagung freigegeben wird.

12. Bremsen-Unterbaugruppe (1a) oder Gruppe von Bremsbaugruppen (1) nach einem der Ansprüche 1 bis 11, **dadurch gekennzeichnet, dass** ein Sensor (51) in ein Gehäuse (16) der Bremskraft-Übertragungseinheit (3) oder der Bremsen-Unterbaugruppe (1a) integriert ist, wobei der Sensor (51) direkt oder indirekt
a) eine Drehstellung oder Drehbewegung der Welle (18), des Planetenträgers (56), des Rotors (54), des Gewinderollers (20) oder des ersten Kniehebels (64) und/oder
b) eine axiale Position oder Bewegung der Gewindespindel (30) oder des zweiten Kniehebels (65)
sensiert.

13. Bremsen-Unterbaugruppe (1a) oder Gruppe von Bremsbaugruppen (1) nach einem der Ansprüche 1 bis 12, **dadurch gekennzeichnet, dass** ein Interface (36) geeignet gestaltet und konfiguriert ist zur Verbindung der Bremskraft-Übertragungseinheit (3) mit einer Scheibenbremseinrichtung (5) oder einer Bremsen-Unterbaugruppe (1a).

14. Bremsen-Unterbaugruppe (1a) oder Gruppe von Bremsbaugruppen (1) nach einem der Ansprüche 1 bis 13, **dadurch gekennzeichnet, dass** ein Betätigungsbereich für eine manuelle Betätigung oder Freigabe der Bremskraft-Übertragungseinheit (3) oder der Bremsbaugruppe (1) vorhanden ist.

15. Bremsen-Unterbaugruppe (1a) oder Gruppe von Bremsbaugruppen (1) nach einem der Ansprüche 1 bis 14, **dadurch gekennzeichnet, dass**
a) die Bremseneinrichtung (5) eine Scheibenbremseinrichtung (13) ist und
b) die Kraftübertragungseinheit (4)
ba) einen Bremshebel (11), der durch die Bremskraft-Übertragungseinheit (3) betätigt wird und der einen Bremsbelag (10) der Scheibenbremseinrichtung (13) über eine Exzentrizität oder eine Exzentereinrichtung betätigt und/oder
bb) einen selbstverstärkenden Mechanismus (12)
aufweist.

## Revendications

1. Sous-ensemble de frein (1a) pour un système de freinage d'un véhicule comprenant:
a) une commande électrique (6), et
b) une unité de transmission de force de freinage (3),
c) dans lequel le sous-ensemble de frein (1a) forme une unité de montage comprenant:
ca) une interface d'ensemble (59a) pour monter le sous-ensemble de frein (1a) sur un autre sous-ensemble de frein (1b) qui comprend un dispositif de frein (5) et une unité de transmission de force supplémentaire (4), et
cb) une interface de transfert de force (60) pour transférer une force de sortie (8) du sous-ensemble de frein (1a) au sous-ensemble de frein (1b),
**caractérisé en ce que**
d) l'unité de transmission de force de freinage (3) comprend un entraînement à levier articulé (68) avec
da) un premier levier articulé (64) ayant un axe de rotation fixe (62) et entraîné par la commande électrique (6), un arbre d'entraînement (63) accouplé par fixation contre la rotation au premier levier articulé (64), l'arbre d'entraînement (63) étant directement entraîné par la commande électrique (6) ou un train planétaire ou n'importe quel autre système de transmission supplémentaire situé dans le flux de force entre la commande électrique (6) et l'arbre d'entraînement (63), et
db) un deuxième levier articulé (65) qui est relié de manière pivotante au premier levier articulé (64) par une articulation (66) et qui forme une tige de poussée (61), une région d'extrémité de la tige de poussée (61) formant l'interface de transfert de force (60a) qui peut être accouplée à l'interface de transfert de force (60b) d'un levier de frein pivotant (11) du sous-ensemble de frein (1b).

2. Groupe d'ensembles de frein (1) dans lequel les ensembles de frein (1) comprennent le sous-ensemble de frein (1b) avec les mêmes dispositifs de frein (5) et les mêmes unités de transmission de force (4), lesdites unités de transmission de force (4) comprenant chacune un levier de frein (11) formant une interface pour une tige de poussée d'actionnement (61), dans lequel
a) les ensembles de frein (1) d'un premier sous-groupe comprennent un actionneur pneumatique de frein (58) pour actionner la tige de poussée (61), et
b) les ensembles de frein (1) d'un deuxième sous-groupe comprennent un sous-ensemble de frein (1a) comprenant:
ba) une commande électrique (6), et
bb) une unité de transmission de force de freinage (3),
bc) dans lequel le sous-ensemble de frein (1a) forme une unité de montage comprenant:
- une interface d'ensemble (59a) pour monter le sous-ensemble de frein (1a) sur un autre sous-ensemble de frein (1b) qui comprend un dispositif de frein (5) et une unité de transmission de force supplémentaire (4), et
- une interface de transfert de force (60) pour transférer une force de sortie (8) du sous-ensemble de frein (1a) au sous-ensemble de frein (1b),
bd) l'unité de transmission de force de freinage (3) comprend un entraînement à levier articulé (68) avec
- un premier levier articulé (64) ayant un axe de rotation fixe (62) et entraîné par la commande électrique (6), et
- un deuxième levier articulé (65) qui est relié de manière pivotante au premier levier articulé (64) par une articulation (66) et qui forme une tige de poussée (61),
les ensembles de frein (1) du deuxième sous-groupe comprenant un sous-ensemble de frein (1a) de la revendication 1.

3. Sous-ensemble de frein (1a) ou groupe d'ensembles de frein (1) selon la revendication 1 ou 2 avec une unité de transmission de force de freinage (3) agencée dans le flux de force de la commande électrique (6) à la tige de poussée (61), **caractérisé en ce qu'**un rouleau fileté (20) et une broche filetée (30) qui engrène avec le rouleau fileté (20) sont agencés dans le flux de force de l'unité de transmission de force de freinage (3).

4. Sous-ensemble de frein (1a) ou groupe d'ensembles de frein (1) selon la revendication 3, **caractérisé en ce que**
a) le rouleau fileté (20) est supporté par un arbre (18) pour être entraîné en rotation autour d'un axe (19) de l'arbre (18),
b) l'arbre (18) est supporté pour être entraîné en rotation autour d'un axe de rotation (17), et
c) la rotation par entraînement de l'arbre (18) autour de l'axe de rotation (17) avec une rotation simultanée du rouleau fileté (20) autour de l'axe (19) de l'arbre (18) est transformée par l'interaction d'engrènement entre le rouleau fileté (20) et la broche filetée (30) en un mouvement de translation de la broche filetée (30).

5. Sous-ensemble de frein (1a) ou groupe d'ensembles de frein (1) selon la revendication 4, **caractérisé en ce qu'**un porte-satellites (56) est supporté pour être entraîné en rotation autour de l'axe de rotation (17), dans lequel le porte-satellites (56) supporte au moins deux arbres (18) supportant chacun un rouleau fileté (20) pour être mis en rotation, lesdits rouleaux filetés (20) engrenant chacun avec la broche filetée (30).

6. Sous-ensemble de frein (1a) ou groupe d'ensembles de frein (1) selon la revendication 4 ou 5, **caractérisé en ce que** l'arbre (18) ou le porte-satellites (56) est relié par une liaison de transfert de couple à un rotor (54).

7. Sous-ensemble de frein (1a) ou groupe d'ensembles de frein (1) selon l'une des revendications 3 à 6, **caractérisé en ce que** la broche filetée (30) est reliée à un logement (16) de l'unité de transmission de force de freinage (3) par un moyeu nervuré (35), dans lequel le moyeu nervuré (35)
a) bloque un mouvement de rotation de la broche filetée (30) par rapport au logement (16), et
b) permet un mouvement de translation de la broche filetée (30) par rapport au logement (16).

8. Sous-ensemble de frein (1a) ou groupe d'ensembles de frein (1) selon l'une des revendications 3 à 7, **caractérisé en ce que** la commande électrique (6) entraîne directement ou indirectement le rouleau fileté (20), au moins un arbre (18), le rotor (54) ou le porte-satellites (56) de l'unité de transmission de force de freinage (3).

9. Sous-ensemble de frein (1a) ou groupe d'ensembles de frein (1) selon l'une des revendications 1 à 8, **caractérisé en ce qu'**une unité de maintien (42) est reliée par une liaison de transfert de couple à l'arbre (18), au porte-satellites (56), au rotor (54) ou au premier levier articulé (64), dans lequel, au moyen d'un actionneur de maintien (44), il est possible d'appliquer un couple de maintien à un élément de maintien (46) pour fixer la position de rotation de l'arbre (18), du porte-satellites (56), du rotor (54) ou du premier levier articulé (64).

10. Sous-ensemble de frein (1a) ou groupe d'ensembles de frein (1) selon la revendication 9, **caractérisé en ce que** l'unité de maintien (42) est un frein de maintien actionné électriquement (45).

11. Sous-ensemble de frein (1a) ou groupe d'ensembles de frein (1) selon la revendication 10, **caractérisé en ce que** le frein de maintien actionné électriquement (45) est actionné lorsqu'il n'est pas alimenté, mais relâché lorsqu'il est alimenté.

12. Sous-ensemble de frein (1a) ou groupe d'ensembles de frein (1) selon l'une des revendications 1 à 11, **caractérisé en ce qu'**un capteur (51) est intégré dans un logement (16) de l'unité de transmission de force de freinage (3) ou du sous-ensemble de frein (1a), ledit capteur (51) détectant directement ou indirectement
a) une position ou un mouvement de rotation de l'arbre (18), du porte-satellites (56), du rotor (54), du rouleau fileté (20) ou du premier levier articulé (64), et/ou
b) une position ou un mouvement axial de la broche filetée (30) ou du deuxième levier articulé (65).

13. Sous-ensemble de frein (1a) ou groupe d'ensembles de frein (1) selon l'une des revendications 1 à 12, **caractérisé par** une interface (36) conçue et configurée pour relier l'unité de transmission de force de freinage (3) à un dispositif de frein à disque (5) ou à un sous-ensemble de frein (1a).

14. Sous-ensemble de frein (1a) ou groupe d'ensembles de frein (1) selon l'une des revendications 1 à 13, **caractérisé par** une région de manipulation pour actionner ou relâcher manuellement l'unité de transmission de force de freinage (3) ou l'ensemble de frein (1).

15. Sous-ensemble de frein (1a) ou groupe d'ensembles de frein (1) selon l'une des revendications 1 à 14, **caractérisé en ce que**
a) le dispositif de frein (5) est un dispositif de frein à disque (13), et
b) l'unité de transmission de force (4) comprend:
ba) un levier de frein (11) qui est actionné par l'unité de transmission de force de freinage (3) et qui actionne une plaquette de frein (10) du dispositif de frein à disque (13) par l'intermédiaire d'un excentrique, et/ou
bb) un mécanisme à auto-application (12).
